# EUROPÄISCHE PATENTSCHRIFT

(11) **EP 3 248 146 B1**
(45) Veröffentlichungstag und Bekanntmachung des Hinweises auf die Patenterteilung: **15.04.2020**
(21) Anmeldenummer: 15706360.3
(22) Anmeldetag: 19.01.2015
(51) Int. Cl.: G06K 19/07, B23Q 1/00, G06K 19/077

(54) **SPANNBOLZEN MIT INTEGRIERTEM RFID-TRANSPONDER**
CLAMPING BOLT WITH INTEGRATED RFID TRANSPONDER
BOULON DE SERRAGE INTÉGRANT UN TRANSPONDEUR RFID

(43) Veröffentlichungstag der Anmeldung: 29.11.2017
(73) Patentinhaber: Balluff GmbH, 73765 Neuhausen a.d.F. (DE); VOLKSWAGEN AKTIENGESELLSCHAFT, 38440 Wolfsburg (DE)
(72) Erfinder: BEUTLER, Robert, 73770 Denkendorf (DE); UHLE, Alexander, 04442 Zwenkau (DE)
(74) Vertreter: Jakelski & Althoff Patentanwälte PartG mbB
(86) Internationale Anmeldenummer: PCT/DE2015/100024
(87) Internationale Veröffentlichungsnummer: WO 2016/116080

(56) Entgegenhaltungen:
- EP-A1- 2 363 235
- US-A1- 2012 198 941

## Beschreibung

Die vorliegende Erfindung betrifft einen Spannbolzen, der einen Aufsatz aufweist, in dem ein RFID-Transponder angeordnet ist.

### Stand der Technik

Nullpunktspannsysteme sind dazu vorgesehen, Trägerbauteile, insbesondere Werkstückträger oder Spannplatten, wiederholgenau exakt an einer vorgegebenen Position zu fixieren. Sie werden beispielsweise bei der Bearbeitung von Zylinderköpfen und von Kurbelgehäusen eingesetzt. Die zu verwendeten Nullpunktspannmodule sehen dabei in der Regel eine Aufnahme vor, in welcher ein Spannbolzen eingeführt werden kann. Ferner sind Spannmittel vorgesehen, welche in einer radial inneren Lage gegen den Spannbolzen wirken und diesen in der Verriegelungslage fixieren. In einer radial äußeren Lage der Spannmittel kann der Spannbolzen aus dem Spannmodul herausgenommen werden.

Der Spannbolzen verfügt üblicherweise über eine kreiszylinderförmige Grundform. Ein Spannbereich an der Oberfläche des Spannbolzens ist dazu vorgesehen, von den Spannmitteln des Nullpunktspannmoduls kontaktiert zu werden. Dieser Spannbereich wird entlang der Längsachse des Spannbolzens in beide Richtungen jeweils durch einen Begrenzungsbereich begrenzt, welcher einen größeren Außendurchmesser aufweist als der Spannbereich. Um ein exaktes Zentrieren des Spannbolzens gegenüber dem Spannmodul zu gewährleisten, ist ein Begrenzungsbereich in der Regel als Konusabschnitt ausgebildet, der zur Anlage an einen spannmodulseitigen Gegenkonus kommt. Zudem sind an diesem Begrenzungsbereich Kraftangriffsabschnitte vorgesehen, die mit einer in axialer Richtung wirkenden Spannkraft beaufschlagbar sind. Hierdurch wird der Spannbolzen beziehungsweise das am Spannbolzen angeordnete Trägerbauteil in axialer Richtung gegen die Oberseite des Spannmoduls beaufschlagt. Zur Verbindung des Spannbolzens mit dem Trägerbauteil weist der Spannbolzen entlang seiner Längsachse eine durchgehende Öffnung auf, in welcher eine Schraube eingeführt werden kann.

Derartige Spannbolzen sind beispielsweise aus der DE 10 2010 013 912 A1 bekannt. Spannaufnahmen von Nullpunktspannsystemen sind beispielsweise aus der DE 10 2013 201 994 A1 bekannt.

Bei der Verwendung von Spannsystemen ergibt sich das Problem, dass ein Spannbolzen nicht lageunabhängig identifiziert werden kann, ohne die Funktion des Spannbolzens zu verändern. Ein verbreitetes Mittel zur Identifizierung von Bauteilen ist das Anbringen eines RFID-Transponders. RFID (Radio Frequency Identification) bezeichnet eine Technologie zum automatischen berührungslosen Identifizieren und Lokalisieren von Objekten mittels Radiowellen. Ein Integrieren eines RFID-Transponders in den Grundkörper eines Spannbolzens ist nicht möglich, da dieser üblicherweise aus einem elektrisch leitfähigen Metall besteht und so die Radiowellen abschirmen würde. Allenfalls wäre es vorstellbar, den Datenträger mittig in den Spannbolzen einzuklemmen. Hierdurch würde allerdings ein Zugang zu der Schraube des Spannbolzens verhindert, welche diesen mit dem Trägerbauteil verbindet.

Dadurch entstünde ein erhöhter Aufwand bei der Montage des Spannbolzens
EP2363235A1 offenbart einen Spannnippel in dem ein Datenträger, in Form eines Transponders vorgesehen ist, und aus US20120198941A1 ist ein Aufsatz mit einem umlaufenden Aufnahmebereich für einen RFID-Transponder bekannt.

Es ist deshalb die Aufgabe der vorliegenden Erfindung, einen Spannbolzen bereitzustellen, der einen RFID-Transponder aufweist, ohne dass hierdurch die Form und die mechanische Funktion des Spannbolzens verändert werden.

### Offenbarung der Erfindung

Ein Aufsatz für einen Spannbolzen weist einen Grundkörper und eine durch den Grundkörper durchgehende Öffnung auf. Eine Kontaktfläche läuft um die durchgehende Öffnung um. Die Kontaktfläche steht orthogonal auf der Längsachse der durchgehenden Öffnung. Sie ist eingerichtet, um den Spannbolzen zu kontaktieren. Zwischen der durchgehenden Öffnung und der Kontaktfläche läuft im Grundkörper um die durchgehende Öffnung ein Aufnahmebereich um. In dem Aufnahmebereich ist ein RFID-Transponder angeordnet. Grundsätzlich kann ein herkömmlicher RFID-Transponder in dem erfindungsgemäßen Aufsatz angeordnet sein. Der RFID-Transponder weist vorzugsweise eine Antenne auf, die in dem Aufnahmebereich um die durchgehende Öffnung herum angeordnet ist. Wenn die durchgehende Öffnung einen kreisförmigen Querschnitt aufweist, kann die Antenne beispielsweise mehrfach kreisförmig um die durchgehende Öffnung herum in dem Aufnahmebereich angeordnet werden. Auf diese Weise kann der erfindungsgemäße Aufsatz eine lange RFID-Antenne aufnehmen, welche ein Auslesen von Daten über größere Entfernungen ermöglicht.

Weiterhin ist es bevorzugt, dass der RFID-Transponder eine mit der Antenne verbundene Leiterplatte aufweist. Auf der Leiterplatte ist in herkömmlicher Weise ein Datenspeicher angeordnet, der Daten zur Identifizierung des Spannbolzens speichern kann. Hierzu handelt es sich bei dem Datenspeicher um einen permanenten Speicher. Weitere übliche Bauteile des RFID-Transponders, wie ein analoger Schaltkreis zum Empfangen und Senden (Transceiver) sowie ein digitaler Schaltkreis, der insbesondere als Mikrocontroller ausgeführt sein kann, können ebenfalls auf der Leiterplatte angeordnet sein.

Die Leiterplatte ist in dem Aufnahmebereich im Wesentlichen parallel zu der durchgehenden Öffnung angeordnet. Sie steht somit hochkant im Aufnahmebereich. Dadurch beansprucht sie Volumen des Aufnahmebereiches im Wesentlichen nur parallel zur Längsachse der durchgehenden Öffnung, nicht aber orthogonal dazu. Dadurch kann der Durchmesser des Aufsatzes an die Dimensionierung eines Spannbolzens angepasst werden, ohne dabei auf Bauraumerfordernisse des RFID-Transponders Rücksicht nehmen zu müssen.

Der Grundkörper besteht vorzugsweise aus einem Kunststoff. Als elektrisch nicht leitfähiges Material hat ein solcher Kunststoff keinen nennenswerten negativen Einfluss auf die Ausbreitung von Radiowellen. Während das Integrieren des RFID-Transponders in einem metallenen Spannbolzen selbst nicht möglich wäre, ermöglicht ein Aufsatz mit einem Grundkörper aus einem Kunststoff die Anordnung des RFID-Transponders an einem Spannbolzen. Für den Grundkörper besonders geeignete Materialien sind insbesondere Polyamide wie beispielsweise PA6 oder PA12.

Unter elektrisch nicht leitfähigen Materialien werden erfindungsgemäß insbesondere Materialien mit einer elektrischen Leitfähigkeit von weniger als 10⁻⁸ S/m verstanden.

Der Aufnahmebereich ist bevorzugt mit einem Füllmaterial gefüllt. Dieses Füllmaterial ist insbesondere elektrisch nicht leitfähig, so dass es keine abschirmende Wirkung auf die Antenne des RFID-Transponders ausübt. Das Füllmaterial verhindert eine ungewollte Positionsänderung des RFID-Transponders in dem Aufnahmebereich. Zudem schützt es den RFID-Transponder vor mechanischer Beschädigung. Besonders geeignete Füllmaterialien sind thermoplastische Kunststoffe, mit welchen der Aufnahmebereich ausgegossen werden kann. Diese sind insbesondere ausgewählt aus der Gruppe der Polyurethan-Gießharze.

Es ist besonders bevorzugt, dass das Füllmaterial so in dem Aufnahmebereich angeordnet ist, dass es mit der Kontaktfläche eine gemeinsame Ebene bildet. Das Füllmaterial vergrößert auf diese Weise die Kontaktfläche und ermöglicht eine besonders sichere und feste Verbindung des Aufsatzes mit einem Spannbolzen, indem dieser sowohl über die Kontaktfläche des Grundkörpers als auch über das Füllmaterial an den Aufsatz angebunden wird.

Weiterhin ist es bevorzugt, dass der Grundkörper Ausnehmungen aufweist, die sich durch die Kontaktfläche erstrecken. Diese ermöglichen ein Eingreifen mit hierzu vorgesehenen Eingreifelementen des Spannbolzens. Dies erhöht die mechanische Belastbarkeit einer Verbindung zwischen dem Aufsatz und dem Spannbolzen.

Der Aufsatz weist vorzugsweise auf seinem der Kontaktfläche zugewandten Ende eine größere Querschnittsfläche auf als auf seinem der Kontaktfläche abgewandten Ende. Damit bildet er die Konusform herkömmlicher Spannbolzen nach und kann an einem Gegenkonus eines Spannmoduls zur Anlage kommen.

Der erfindungsgemäße Spannbolzen weist in herkömmlicher Weise einen kreiszylinderförmigen Spannbereich auf. Ein erster Begrenzungsbereich und ein zweiter Begrenzungsbereich begrenzen entlang der Längsachse des Spannbolzens den Spannbereich. Hierzu weist jeder Begrenzungsbereich einen größeren Außendurchmesser auf als der Spannbereich. Entlang einer Längsachse des Spannbolzens verläuft eine durchgehende Öffnung, welche eine Schraube zur Verbindung des Spannbolzens mit einem Trägerbauteil aufnehmen kann. Der Aufsatz ist an dem ersten Begrenzungsbereich angeordnet. Gemeinsam mit dem Aufsatz erfüllt der erfindungsgemäße Spannbolzen alle Aufgaben eines herkömmlichen Spannbolzens. Dabei ermöglicht der RFID-Transponder in dem Aufsatz die lageunabhängige Identifizierung des Spannbolzens.

Die durchgehende Öffnung des Aufsatzes und die durchgehende Öffnung des Spannbolzens weisen bevorzugt denselben Querschnitt auf. Unter dem Querschnitt wird erfindungsgemäß die Form und Größe der Querschnittsfläche verstanden, die orthogonal auf der Längsachse der durchgehenden Öffnung steht. Hierdurch unterscheidet sich die aus der durchgehenden Öffnung des Aufsatzes und der durchgehenden Öffnung des Spannbolzens zusammengesetzte durchgehende Öffnung nicht von der durchgehenden Öffnung eines herkömmlichen Spannbolzens, so dass sie dieselbe Aufgabe für die Verbindung mit einem Trägerbauteil erfüllen kann.

Die Resonanzfrequenz des RFID-Transponders ist vorzugsweise an das Material angepasst, aus dem der erste Begrenzungsbereich besteht. Auch wenn der RFID-Transponder vom Material des Aufsatzes umgeben ist und nicht vom Material des übrigen Spannbolzens, bei dem es sich insbesondere um ein Metall, wie beispielsweise gehärteten Stahl handeln kann, übt die Nähe dieses Metalls dennoch einen Einfluss auf die Eigenschaften des RFID-Transponders aus. Um diesen Effekt spezifisch für das Material des ersten Begrenzungsbereichs auszugleichen, ist insbesondere auf der Leiterplatte ein Kondensator vorgesehen, dessen Kapazität in Abhängigkeit vom Material des ersten Begrenzungsbereiches gewählt ist.

Um ein Lösen des Aufsatzes vom ersten Begrenzungsbereich zu verhindern, ist die Kontaktfläche des Aufsatzes vorzugsweise mit dem ersten Begrenzungsbereich des Spannbolzens verklebt.

Wenn der Aufsatz Ausnehmungen aufweist, kann eine weitere Stabilisierung der Verbindung zwischen dem ersten Begrenzungsbereich und dem Aufsatz vorzugsweise dadurch erzielt werden, dass der erste Begrenzungsbereich des Spannbolzens mehrere Eingreifelemente aufweist, wobei jedes Eingreifelement in eine Ausnehmung des Aufsatzes eingreift.

Die Form des Aufsatzes und die Form des ersten Begrenzungsbereiches sind bevorzugt so aufeinander abgestimmt, dass der erste Begrenzungsbereich gemeinsam mit dem Aufsatz eine Konusform bildet. Dadurch können der Aufsatz und der erste Begrenzungsbereich gemeinsam im Gegenkonus eines Spannmoduls zur Anlage kommen.

### Kurze Beschreibung der Zeichnungen

- Fig. 1: zeigt eine isometrische Darstellung eines Nullpunktspannmoduls gemäß dem Stand der Technik.
- Fig. 2: zeigt eine isometrische Darstellung eines Aufsatzes gemäß einem Ausführungsbeispiel der Erfindung.
- Fig. 3: zeigt eine Aufsicht auf den Aufsatz gemäß Fig. 2.
- Fig. 4: zeigt eine Schnittdarstellung des Aufsatzes gemäß Fig. 3 entlang der Linie IV-IV.
- Fig. 5: zeigt eine isometrische Darstellung des Aufsatzes gemäß Fig. 5 von seiner Rückseite unter Weglassung des in seinem Aufnahmebereich enthaltenen Füllmaterials.
- Fig. 6: zeigt eine isometrische Darstellung eines Spannbolzens gemäß einem Ausführungsbeispiel der Erfindung.
- Fig. 7: zeigt einen Ausschnitt eines Spannbolzens gemäß einem Ausführungsbeispiel der Erfindung in isometrischer Darstellung unter Weglassung des Aufsatzes.

### Ausführungsbeispiele der Erfindung

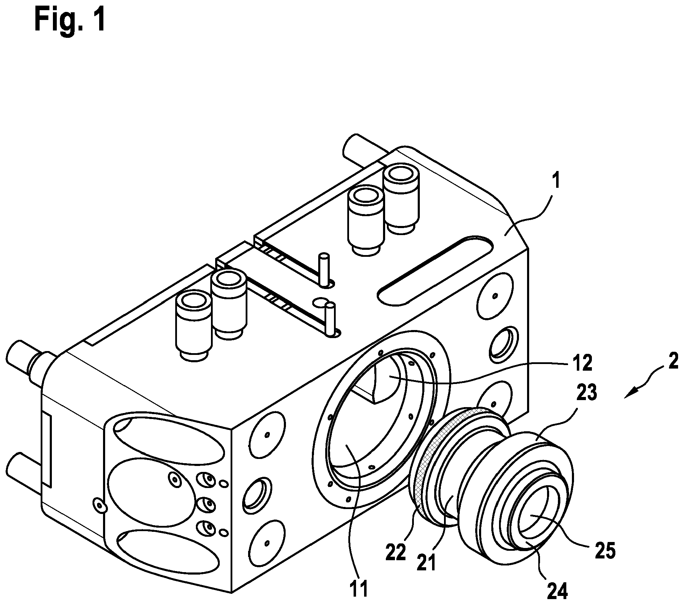

Ein herkömmliches Nullpunktspannsystem, wie es aus der DE 10 2013 201 994 A1 bekannt ist, ist in Fig. 1 dargestellt. Es weist eine Spannaufnahme 1 auf, in deren Grundgehäuse sich eine kreiszylinderförmige Einführöffnung 11 befindet. In der Spannaufnahme 1 sind Verriegelungselemente 12 vorgesehen, die als Schieber ausgebildet sind. Sie sind aus einer radial äußeren Entriegelungslage in eine radial innere Verriegelungslage verlagerbar. Beim Verlagern der Verriegelungselemente 12 in die radial innere Verriegelungslage wird ein in die Einführöffnung 11 eingeführter Spannbolzen 2 zum einen in die Einführöffnung 11 eingezogen und zum anderen dort verriegelt.

Der Spannbolzen 2 weist einen kreiszylinderförmigen Spannbereich 21 auf. Dieser wird durch einen konusförmigen ersten Begrenzungsbereich 22 und einen konusförmigen zweiten Begrenzungsbereich 23 begrenzt. Wenn der Spannbolzen 2 in die Einführöffnung 11 eingeführt ist und sich die Verriegelungselemente 12 in ihrer Verriegelungsposition befinden, dann liegen die Verriegelungselemente 12 an dem Verriegelungsbereich 21 an. Der Spannbolzen 2 weist einen Sitz 24 zur Anlage an einem Trägerbauteil (nicht dargestellt) auf. Um das Trägerbauteil, bei dem es sich beispielsweise um eine Spannplatte oder auch um ein zu bearbeitendes Werkstück handeln kann, fest mit dem Spannbolzen zu verbinden, weist der Spannbolzen eine entlang seiner Längsachse durchgehende kreiszylinderförmige Öffnung 25 auf, in welcher eine Schraube eingeführt werden kann. Der Spannbolzen 2 besteht aus gehärtetem Stahl.

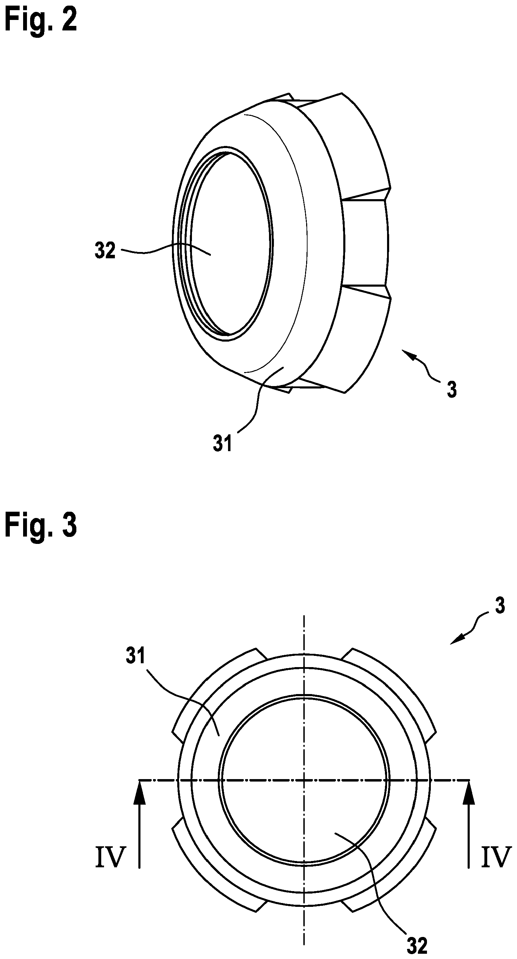

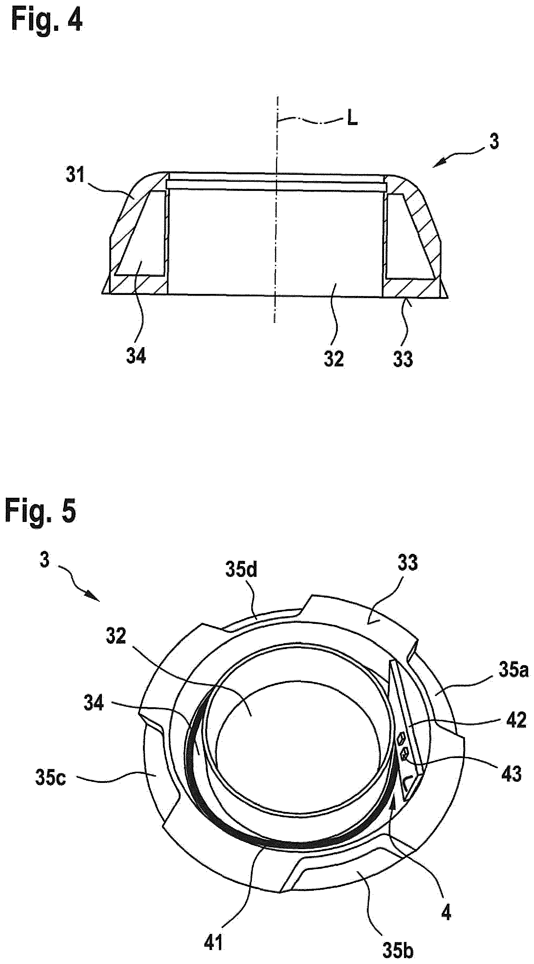

In den Fig. 2 bis 5 ist ein Ausführungsbeispiel eines Aufsatzes 3 für einen erfindungsgemäßen Spannbolzen dargestellt. Dieser weist einen Grundkörper 31 auf, der aus dem Kunststoff PA6 GF30 besteht. Der Grundkörper ist im Wesentlichen konusförmig. Sein maximaler Durchmesser steigt vorliegend von 18 mm an seiner Vorderseite auf 21 mm an seiner Rückseite. Eine kreisförmige Öffnung 32 mit einem Durchmesser von 14,5 mm geht durch den Grundkörper 31 hindurch. Sie verläuft entlang der Längsachse L des Aufsatzes 3. In der in Fig. 5 gezeigten rückseitigen Ansicht des Aufsatzes 3 ist dargestellt, dass dieser rückseitig eine Kontaktfläche 33 aufweist. Zwischen der Kontaktfläche 33 und der durchgehenden Öffnung 32 läuft ein Aufnahmebereich 34 um die durchgehende Öffnung 32 um. Dieser erstreckt sich entlang der Längsachse L des Aufsatzes 3 über seine gesamte Länge. In dem Aufnahmebereich 34 ist ein RFID-Transponder 4 angeordnet. Dieser weist eine Antenne 41 auf, die in mehreren Windungen um die durchgehende Öffnung 32 herumgelegt ist. Sie endet an einer Leiterplatte 42, auf welcher ein permanenter Datenspeicher 43 angeordnet ist. Bei dem Datenspeicher 43 handelt es sich um einen Datenspeicher mit bis zu 128 kByte Speicherkapazität gemäß ISO15693. Die Leiterplatte steht hochkant in dem Aufnahmebereich und ist damit im Wesentlichen parallel zu der durchgehenden Öffnung 32 angeordnet. Der Aufnahmebereich 34 ist so mit einem Zweikomponentenharz auf Polyurethanbasis als Füllmaterial vergossen, dass dieses zusammen mit der Kontaktfläche 33 eine gemeinsame Fläche bildet. In der Kontaktfläche 33 sind vier Ausnehmungen 35a-35d ausgebildet. Diese sind jeweils radial zur äußeren Wand des Aufsatzes 3 hin offen.

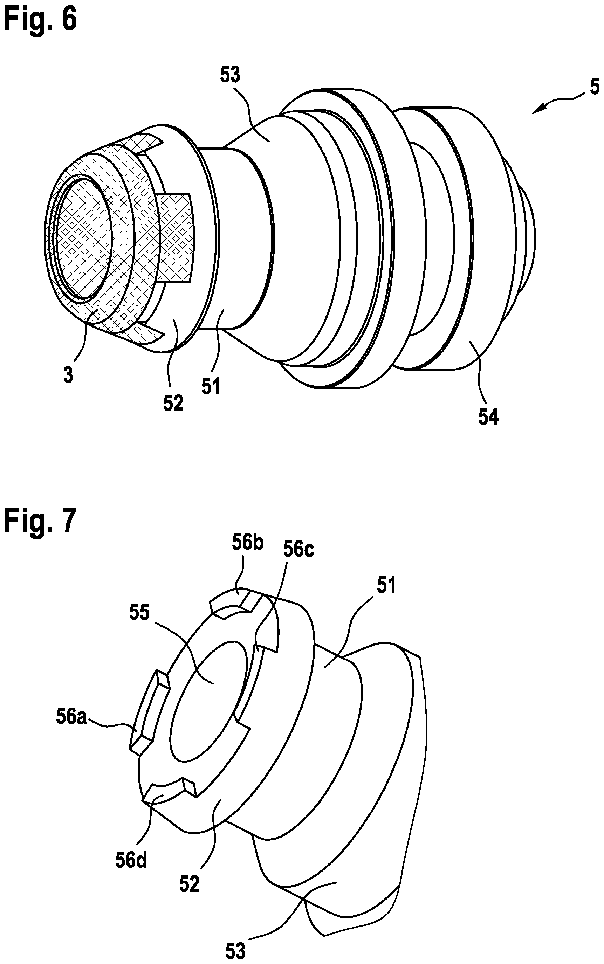

In Fig. 6 ist ein Ausführungsbeispiel eines erfindungsgemäßen Spannbolzens 5 dargestellt. Dieser weist einen kreiszylinderförmigen Spannbereich 51 und zwei Begrenzungsbereiche 52, 53 auf. Der erste Begrenzungsbereich 52 hat die Form eines Konusstumpfes. Der zweite Begrenzungsbereich 53 ist konisch. An dem von dem ersten Begrenzungsbereich 52 abgewandten Ende des Spannbolzens befindet sich ein Sitz 54 zur Kontaktierung eines Trägerbauteils. Der Aufsatz 3 gemäß dem voranstehend beschriebenen Ausführungsbeispiel der Erfindung ist mittels eines Epoxidharzes mit dem ersten Begrenzungsbereich 52 verklebt. Der erste Begrenzungsbereich weist vier in Längsrichtung des Spannbolzens vorspringende Eingreifelemente 56a-d auf, die in die Ausnehmungen 35a-d des Aufsatzes 3 eingreifen und so seitlich auf den Aufsatz 3 wirkende Kräfte aufnehmen. Der Spannbolzen 5 weist eine durchgehende Öffnung 55 auf, die ebenso wie die durchgehende Öffnung 32 des Aufsatzes 3 einen kreisförmigen Querschnitt mit einem Durchmesser von 14,5 mm aufweist. Der Spannbolzen gemäß dem vorliegenden Ausführungsbeispiel der Erfindung kann anstelle des herkömmlichen Spannbolzens 2 in die herkömmliche Spannaufnahme 1 eingebracht werden. Dabei wirken von den Verriegelungselementen 12 hervorgerufene Spannungen nur auf den Spannbereich 51 und auf den ersten Begrenzungsbereich 52 des Spannbolzens nicht aber auf den Aufsatz 3.

Mittels des RFID-Transponders 4 kann der Spannbolzen 5 lageunabhängig identifiziert werden. Um störende Einflüsse des ersten Begrenzungsbereichs 52, der ebenso wie der Spannbereich 51, der zweite Begrenzungsbereich 53 und der Sitz 54 aus gehärtetem Stahl besteht, auf den RFID-Transponder 4 zu minimieren, ist dessen Resonanzfrequenz an den gehärteten Stahl angepasst. Hierzu ist auf der Leiterplatte 42 ein geeigneter Kondensator (nicht gezeigt) vorgesehen.

## Patentansprüche

1. Spannbolzen (5), aufweisend
- einen kreiszylinderförmigen Spannbereich (51),
- einen ersten Begrenzungsbereich (52) und einen zweiten Begrenzungsbereich (53), welche entlang der Längsachse des Spannbolzens (5) den Spannbereich (51) begrenzen, wobei jeder Begrenzungsbereich (52, 53) einen größeren Außendurchmesser aufweist als der Spannbereich (51), und
- eine entlang einer Längsachse des Spannbolzens (5) verlaufende durchgehende Öffnung (55),
**dadurch gekennzeichnet, dass** an dem ersten Begrenzungsbereich (52) ein Aufsatz (3) angeordnet ist, aufweisend
- einen Grundkörper (31),
- eine durch den Grundkörper durchgehende Öffnung (32),
- einen um die durchgehende Öffnung umlaufenden Kontaktfläche (33), die orthogonal auf der Längsachse (L) der durchgehenden Öffnung (32) steht, und die eingerichtet ist, um den Spannbolzen (5) zu kontaktieren,
- einen zwischen der durchgehenden Öffnung (32) und der Kontaktfläche (33) im Grundkörper um die durchgehende Öffnung (32) umlaufenden Aufnahmebereich (34), und
- einen in dem Aufnahmebereich (34) angeordneten RFID-Transponder (4).

2. Spannbolzen (5) nach Anspruch 1, **dadurch gekennzeichnet, dass** der RFID-Transponder (4) eine Antenne (41) aufweist, die in dem Aufnahmebereich (34) um die durchgehende Öffnung (32) herum angeordnet ist.

3. Spannbolzen (5) nach Anspruch 2, **dadurch gekennzeichnet, dass** der RFID-Transponder (4) eine mit der Antenne (41) verbundene Leiterplatte (42) aufweist, auf welcher ein Datenspeicher (43) angeordnet ist, wobei die Leiterplatte (42) in dem Aufnahmebereich (34) im Wesentlichen parallel zu der durchgehenden Öffnung (32) angeordnet ist.

4. Spannbolzen (5) nach einem der Ansprüche 1 bis 3, **dadurch gekennzeichnet, dass** der Grundkörper (31) aus einem Kunststoff besteht.

5. Spannbolzen (5) nach einem der Ansprüche 1 bis 4, **dadurch gekennzeichnet, dass** der Aufnahmebereich (34) mit einem Füllmaterial gefüllt ist.

6. Spannbolzen (5) nach Anspruch 5, **dadurch gekennzeichnet, dass** das Füllmaterial so in dem Aufnahmebereich (34) angeordnet ist, dass es mit der Kontaktfläche (33) eine gemeinsame Ebene bildet.

7. Spannbolzen (5) nach einem der Ansprüche 1 bis 6, **dadurch gekennzeichnet, dass** der Aufsatz (3) auf seinem der Kontaktfläche (33) zugewandten Ende eine größere Querschnittsfläche aufweist, als auf seinem der Kontaktfläche (33) abgewandten Ende.

8. Spannbolzen (5) nach einem der Ansprüche 1 bis 7, **dadurch gekennzeichnet, dass** die durchgehende Öffnung (32) des Aufsatzes (3) und die durchgehende Öffnung (55) des Spannbolzens (5) denselben Querschnitt aufweisen.

9. Spannbolzen (5) nach einem der Ansprüche 1 bis 8, **dadurch gekennzeichnet, dass** die Resonanzfrequenz des RFID-Transponders (4) an das Material angepasst ist, aus dem der erste Begrenzungsbereich (52) besteht.

10. Spannbolzen (5) nach einem der Ansprüche 1 bis 9, **dadurch gekennzeichnet, dass** die Kontaktfläche (33) des Aufsatzes (3) mit dem ersten Begrenzungsbereich (52) des Spannbolzens (5) verklebt ist.

11. Spannbolzen (5) nach einem der Ansprüche 1 bis 10, **dadurch gekennzeichnet, dass** der Grundkörper Ausnehmungen (35a-d) aufweist, die sich durch die Kontaktfläche (33) erstrecken.

12. Spannbolzen (5) nach Anspruch 11, **dadurch gekennzeichnet, dass** der erste Begrenzungsbereich (52) des Spannbolzens (5) mehrere Eingreifelemente (56a-d) aufweist, wobei jedes Eingreifelement (56a-d) in eine Ausnehmung (35a-d) des Aufsatzes (3) eingreift.

13. Spannbolzen (5) nach einem der Ansprüche 1 bis 12, **dadurch gekennzeichnet, dass** der erste Begrenzungsbereich (52) gemeinsam mit dem Aufsatz (3) eine Konusform bildet.

## Claims

1. Clamping bolt (5) having
- a circular-cylindrically shaped clamping region (51),
- a first boundary region (52) and a second boundary region (53) which border the clamping region (51) along the longitudinal axis of the clamping bolt (5), wherein each boundary region (52, 53) has a greater external diameter than the clamping region (51), and
- a through opening (55) running along a longitudinal axis of the clamping bolt (5),
**characterised in that** an attachment (3) is arranged on the first boundary region (52), said attachment (3) having
- a base body (31),
- an opening (32) passing through the base body,
- a contact surface (33) that runs around the through opening, said contact surface (33) standing orthogonally on the longitudinal axis (L) of the through opening (32), and that is adapted to contact the clamping bolt (5),
- a receptacle region (34) running around the through opening (32) between the through opening (32) and the contact surface (33) in the base body, and
- a RFID transponder (4) arranged in the receptacle region (34).

2. Clamping bolt (5) according to claim 1, **characterised in that** the RFID transponder (4) has an antenna (41) that is arranged in the receptacle region (34) around the through opening (32).

3. Clamping bolt (5) according to claim 2, **characterised in that** the RFID transponder (4) has a circuit board (42) connected to the antenna (41), on which a data memory (43) is arranged, wherein the circuit board (42) is arranged in the receptacle region (34) substantially in parallel to the through opening (32).

4. Clamping bolt (5) according to one of claims 1 to 3, **characterised in that** the base body (31) consists of a plastic.

5. Clamping bolt (5) according to one of claims 1 to 4, **characterised in that** the receptacle region (34) is filled with a filling material.

6. Clamping bolt (5) according to claim 5, **characterised in that** the filling material is arranged in the receptacle region (34) in such a way that it forms a common plane with the contact surface (33).

7. Clamping bolt (5) according to one of claims 1 to 6, **characterised in that** the attachment (3) has a larger cross-sectional surface on its end facing towards the contact surface (33) than on its end facing away from the contact surface (33).

8. Clamping bolt (5) according to one of claims 1 to 7, **characterised in that** the through opening (32) of the attachment (3) and the through opening (55) of the clamping bolt (5) have the same cross-section.

9. Clamping bolt (5) according to one of claims 1 to 8, **characterised in that** the resonance frequency of the RFID transponder (4) is adapted to the material of which the first boundary region (52) consists.

10. Clamping bolt (5) according to one of claims 1 to 9, **characterised in that** the contact surface (33) of the attachment (3) is adhered to the first boundary region (52) of the clamping bolt (5).

11. Clamping bolt (5) according to one of claims 1 to 10, **characterised in that** the base body has recesses (35a-d) that extend through the contact surface (33).

12. Clamping bolt (5) according to claim 11, **characterised in that** the first boundary region (52) of the clamping bolt (5) has several engaging elements (56a-d), wherein each engaging element (56a-d) engages in one recess (35a-d) of the attachment (3).

13. Clamping bolt (5) according to one of claims 1 to 12, **characterised in that** the first boundary region (52), together with the attachment (3), forms a conical shape.

## Revendications

1. Boulon de serrage (5), présentant
- une partie de serrage (51) de forme cylindrique circulaire,
- une première partie de délimitation (52) et une deuxième partie de délimitation (53) qui délimitent la partie de serrage (51) le long de l'axe longitudinal du boulon de serrage (5), chacune desdites parties de délimitation (52, 53) présentant un diamètre extérieur supérieur à celui de la partie de serrage (51), et
- une ouverture traversante (55) dirigée le long de l'axe longitudinal du boulon de serrage (5),
**caractérisé en ce qu'**une pièce rapportée (3) est disposée sur la première partie de délimitation (52), laquelle pièce rapportée présente
- un corps principal (31),
- une ouverture (32) traversant le corps principal,
- une surface de contact (33) qui entoure l'ouverture traversante et est orthogonale par rapport à l'axe longitudinal (L) de l'ouverture traversante (32), et qui est conçue pour venir en contact avec le boulon de serrage (5),
- une partie de réception (34) située dans le corps principal, autour de l'ouverture traversante (32), entre l'ouverture traversante (32) et la surface de contact (33), et
- un transpondeur RFID (4) disposé dans la partie de réception (34).

2. Boulon de serrage (5) selon la revendication 1, **caractérisé en ce que** le transpondeur RFID (4) présente une antenne (41) disposée dans la partie de réception (34) autour de l'ouverture traversante (32).

3. Boulon de serrage (5) selon la revendication 2, **caractérisé en ce que** le transpondeur RFID (4) présente une carte de circuit imprimée (42) reliée à l'antenne (41) et sur laquelle est disposé un dispositif mémoire (43), ladite carte de circuit imprimée (42) étant disposée dans la partie de réception (34) de manière sensiblement parallèle à l'ouverture traversante (32).

4. Boulon de serrage (5) selon l'une des revendications 1 à 3, **caractérisé en ce que** le corps principal (31) se compose de matière plastique.

5. Boulon de serrage (5) selon l'une des revendications 1 à 4, **caractérisé en ce que** la partie de réception (34) est remplie d'un matériau de remplissage.

6. Boulon de serrage (5) selon la revendication 5, **caractérisé en ce que** le matériau de remplissage est disposé dans la partie de réception (34) de façon à former un plan commun avec la surface de contact (33).

7. Boulon de serrage (5) selon l'une des revendications 1 à 6, **caractérisé en ce que** la pièce rapportée (3) présente, sur son extrémité proche de la surface de contact (33), une surface de la section transversale supérieure à celle de son extrémité éloignée de la surface de contact (33).

8. Boulon de serrage (5) selon l'une des revendications 1 à 7, **caractérisé en ce que** l'ouverture traversante (32) de la pièce rapportée (3) et l'ouverture traversante (55) du boulon de serrage (5) présentent la même section transversale.

9. Boulon de serrage (5) selon l'une des revendications 1 à 8, **caractérisé en ce que** la fréquence de résonance du transpondeur RFID (4) est adaptée au matériau constituant la première partie de délimitation (52).

10. Boulon de serrage (5) selon l'une des revendications 1 à 9, **caractérisé en ce que** la surface de contact (33) de la pièce rapportée (3) est collée à la première partie de délimitation (52) du boulon de serrage (5).

11. Boulon de serrage (5) selon l'une des revendications 1 à 10, **caractérisé en ce que** le corps principal présente des évidements (35a-d) qui s'étendent dans la surface de contact (33).

12. Boulon de serrage (5) selon la revendication 11, **caractérisé en ce que** la première partie de délimitation (52) du boulon de serrage (5) présente plusieurs éléments d'emboîtement (56a-d), chacun desdits éléments d'emboîtement (56a-d) s'emboîtant dans un évidement (35ad) de la pièce rapportée (3).

13. Boulon de serrage (5) selon l'une des revendications 1 à 12, **caractérisé en ce que** la première partie de délimitation (52) conjointe à la pièce rapportée (3) produit une forme conique.
